(19) 

**Europäisches Patentamt**

**European Patent Office**

**Office européen des brevets**

(11) **EP 4 491 399 A1**

(12) # EUROPEAN PATENT APPLICATION

(43) Date of publication:
**15.01.2025 Bulletin 2025/03**

(21) Application number: **24187480.9**

(22) Date of filing: **09.07.2024**

(51) International Patent Classification (IPC):
**B33Y 10/00** *(2015.01)*   **B33Y 30/00** *(2015.01)*
**C04B 35/626** *(2006.01)*   **C04B 35/634** *(2006.01)*

(52) Cooperative Patent Classification (CPC):
**B33Y 10/00; B29C 64/165; B33Y 30/00;**
**C04B 35/111; C04B 35/6263; C04B 35/6264;**
**C04B 35/6269; C04B 35/63416; C04B 35/6342;**
C04B 2235/5436; C04B 2235/5445;
C04B 2235/6026; C04B 2235/6562;
C04B 2235/9638

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **11.07.2023   JP 2023113463**
**15.02.2024   JP 2024021480**
**02.07.2024   JP 2024106853**

(71) Applicant: **Ricoh Company, Ltd.**
**Tokyo 143-8555 (JP)**

(72) Inventor: **KAMODA, Kiichi**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **METHOD FOR PRODUCING THREE-DIMENSIONAL FABRICATED OBJECT, FABRICATION APPARATUS, AND FABRICATION SYSTEM**

(57)   A method for producing a three-dimensional fabricated object is provided that includes: forming (S3) a powder layer with a powder containing a ceramic material; applying (S4) a liquid on the powder layer, and heating (S5) the powder layer applied with the liquid, in which, in the heating (S5), a temperature of the powder layer applied with the liquid is controlled to 30°C or higher and 60°C or lower, and a fabricated object obtained by repeating the forming (S3) and the applying (S4) once or more has a viscosity of 1,000 Pa·s or higher and 100,000 Pa s or lower, further comprising: measuring (S7) the viscosity of the fabricated object after the heating, wherein an amount or area of the liquid to be applied is adjusted so that the viscosity is a predetermined value.

# FIG. 1

EP 4 491 399 A1

## Description

BACKGROUND

Technical Field

The present disclosure relates to a method for producing a three-dimensional fabricated object, a fabrication apparatus, and a fabrication system.

Related Art

As one style of three-dimensional fabrication methods, binder jetting methods that make it possible to obtain a three-dimensional fabricated object by injecting a binder to a material are known.

For example, Japanese Unexamined Patent Application Publication No. 2022-026529 discloses that, for the purpose of obtaining a dense three-dimensional fabricated object, a fine powder resin is granulated to prepare secondary particles, on which a solvent that dissolves the resin is applied.

However, Japanese Unexamined Patent Application Publication No. 2022-026529 has a problem that it is difficult to produce a high-density and high-precision three-dimensional fabricated object.

SUMMARY

An object of the present invention is to provide a method for producing a high-density and high-precision three-dimensional fabricated object.

As a means to solve the above-mentioned problem, a method for producing a three-dimensional fabricated object according to embodiments of the present invention includes forming a powder layer with a powder containing a ceramic material, applying a liquid on the powder layer, and heating the powder layer applied with the liquid. In the heating, a temperature of the powder layer applied with the liquid is controlled to 30°C or higher and 60°C or lower. A fabricated object obtained by repeating the forming and the applying once or more has a viscosity of 1,000 Pa s or higher and 100,000 Pa s or lower.

According to embodiments of the present invention, a method for producing a high-density and high-precision three-dimensional fabricated object is provided.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a conceptual diagram illustrating a fabrication system according to one embodiment of the present invention.
FIG. 2 is a functional block diagram of a fabrication system according to one embodiment of the present invention.
FIG. 3A is a schematic diagram illustrating a powder containing a ceramic material according to one embodiment of the present invention.
FIG. 3B is a schematic diagram illustrating a three-dimensional fabricated object producing method according to one embodiment of the present invention.
FIG. 3C is a schematic diagram illustrating a three-dimensional fabricated object producing method according to one embodiment of the present invention.
FIG. 4 is a flowchart of a process flow in a three-dimensional fabricated object producing method according to one embodiment of the present invention.
FIG. 5 is a diagram illustrating a function of a control unit according to one embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity.

However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

(Method for Producing Three-Dimensional Fabricated Object)

A method for producing a three-dimensional fabricated object (hereinafter may be "three-dimensional fabricated object producing method") according to the present embodiment includes a formation process of forming a powder layer with a powder containing a ceramic material, an application process of applying a liquid on the powder layer, and a heating process of heating the powder layer applied with the liquid. The method is characterized in that the temperature of the powder layer applied with the liquid is controlled to 30°C or higher and 60°C or lower in the heating process. A fabricated object obtained by repeating the formation process and the application process once or more has a viscosity of 1,000 Pa s or higher and 100,000 Pa·s or lower. The method optionally includes other processes.

According to the present embodiment, a high-density and high-precision three-dimensional fabricated object can be obtained by setting the viscosity of the fabricated object to within the predetermined range. The generation of viscosity facilitates mass transfer in such a direction that the liquid fills voids in regions applied with the liquid, to obtain a high-density three-dimensional fabricated object. A high viscosity to some extent prevents the liquid from diffusing outside the regions applied with the liquid, and also mitigates the shrinkage action to achieve a stable fabrication.

The regions where the liquid has been applied on the powder layer are pasty by a mixed material of a ceramic powder, a solvent, a resin, and other materials. The viscosity depends on the combination of the materials and processes. Thus, even if the material is changed, the viscosity within the predetermined range can be obtained by adjusting the process. Also, it is possible to increase the density of the fabricated object and to decrease the viscosity by applying vibration or another means to the fabricated object during fabrication.

The fabricated object of the present embodiment has a viscosity of 1,000 Pa·s or higher and 100,000 Pa s or lower. To prevent the fabricated object from warping, the viscosity of the fabricated object is preferably 70,000 Pa·s or lower, and more preferably 55,000 Pa·s or lower. For high-precision fabrication of a three-dimensional fabricated object, the viscosity of the fabricated object is preferably 5,000 Pa s or higher, more preferably 10,000 Pa s or higher, and much more preferably 20,000 Pa·s or higher. The viscosity of the fabricated object can be measured with a rheometer.

The terms used in the present disclosure will be defined as below.

In the present disclosure, the term "during fabrication" refers to a state on the way of repeated formation and application processes.

The term "fabricated object" refers to an object formed by repeating the formation and application processes in an application unit.

The "three-dimensional fabricated object" refers to an object formed by degreasing and sintering the fabricated object. That means, the "three-dimensional fabricated object" refers to an object that has undergone all processes.

The three-dimensional fabricated object producing method according to the present embodiment includes a formation process and an application process, and optionally further includes other processes. A high-density and high-precision fabricated object can be obtained by repeating a prescribed number of formation and application processes.

<Formation Process>

In the formation process, a powder layer is formed from a powder containing a ceramic material. The powder serves as secondary particles including primary particles.

- Primary Particle -

The primary particles in the present embodiment include a ceramic as a main component. The ceramic means a sintered compact produced by heating and bake-hardening inorganic materials.

Herein, the main component means a ceramic in a content of more than 50% by mass based on the primary particles. The content of the ceramic in the primary particles is preferably 80% by mass or more, more preferably 90% by mass or more.

Examples of raw materials for the ceramic include, but are not limited to, glass, metal oxides, metal carbides, and metal nitrides.

Examples of glass include, but are not limited to, silica glass (quartz glass) and soda-lime silica glass.

Examples of the metal oxides include, but are not limited to, zirconia, alumina, and mullite (aluminosilicate mineral).

Examples of the metal carbides include, but are not limited to, silicon carbide and tungsten carbide.

Examples of the metal nitrides include, but are not limited to, silicon nitride and aluminum nitride.

Each of these ceramics may be used alone or in combination with others. Above all, zirconia, alumina, mullite (aluminosilicate mineral), tungsten carbide, silicon carbide, silicon nitride, and aluminum nitride are preferable from the viewpoint of maintaining high strength.

The particle diameter of the primary particles is preferably 10 $\mu$m or smaller, more preferably 5 $\mu$m or smaller, even more preferably 2 $\mu$m or smaller. A particle diameter of 10 $\mu$m or smaller is preferable in that the sintering can be smoothly advanced.

- Secondary Particle -

A powder for three-dimensional fabrication is produced by preparing the secondary particles using the primary particles. The primary particles have small diameters and are therefore poor in fluidity and handleability. Thus, the primary particles are processed into the secondary particles containing a binder resin to improve handleability.

A method for producing the secondary particles is not particularly limited and can be selected as appropriate depending on an intended purpose. Examples of the method include, but are not limited to, a method in which the binder resin is mixed with the primary particles according to a known method.

A method for granulating the primary particles with the binder resin is not particularly limited, and can be selected as appropriate from known granulation methods. Examples of the method include, but are not limited to, a rolling flow method, a spray drying method, a stirring granulation method, a dipping method, and a kneader coating method. Also, these granulation methods can be implemented using various known commercially available coating and granulation apparatuses. More specifically, the secondary particles may be prepared in such a way that the primary particles are mixed with the binder resin in a solvent and fully dispersed to prepare a slurry, and the slurry is dried and pulverized.

- Binder Resin -

The binder resin included in the secondary particles contributes e.g. to binding between the primary particles, and to rebinding between the ceramic particles around the binder resin after dissolution of the binder resin in the liquid during liquid dripping.

Types of the binder resin are not particularly limited and can be selected as appropriate depending on an intended purpose. Preferred examples of the binder resin include, but are not limited to, thermoplastic resins such as acryl, maleic acid, silicone, butyral, polyester, polyvinyl acetate, vinyl chloride/vinyl acetate copolymer, polyethylene, polypropylene, polyacetal, ethylene/vinyl acetate copolymer, ethylene/(meth)acrylic acid copolymer, $\alpha$-olefin/maleic anhydride copolymer, esterified $\alpha$-olefin/maleic anhydride copolymer, acrylic polyol, polystyrene, poly(meth)acrylate, $\alpha$-olefin/maleic anhydride/vinyl group-containing monomer copolymer, styrene/maleic anhydride copolymer, styrene/(meth)acrylate copolymer, polyamide, epoxy resin, xylene resin, ketone resin, petroleum resin, rosin or its derivative, chroman-indene resin, terpene resin, polyurethane resin, synthetic rubbers such as styrene/butadiene rubber, polyvinyl butyral, nitrile rubber, acrylic rubber, and ethylene/propylene rubber, as well as nitrocellulose. Above all, polyvinyl butyral, polyvinyl acetate, and acrylic polyol are preferable from the viewpoint of high degreasability and bondability with ceramics. Each of these binder resins may be used alone or in combination with others.

A content of the binder resin in the secondary particles is not particularly limited and can be selected as appropriate depending on an intended purpose. However, from the viewpoint of preventing cracking, defect generation, and deformation of the three-dimensional fabricated object, the content of the binder resin is preferably 25% by mass or less, more preferably 20% by mass or less, even more preferably 15% by mass or less, particularly preferably 10% by mass or less. From the viewpoint of the strength of the fabricated object, the lower limit of the binder resin content is preferably 1% by mass or more, more preferably 3% by mass or more.

<Application Process>

In the application process, a liquid is applied on the powder layer formed in the formation process. Thereby, the binder resin included in the secondary particles is dissolved in the liquid to return the secondary particles to the primary particles, so that voids formed between the secondary particles are filled with the primary particles. As a result, regions where the liquid is applied on the powder layer are fixed by the binder resin, and the shape of the secondary particles collapses to homogenize the regions applied with the liquid, so that voids and unsolidified regions can be decreased by the regions applied with the liquid. On the edges of the regions applied with the liquid, irregularity in the planar direction resulting from the secondary particles can be decreased, and a fabrication accuracy can be improved.

The application process is not particularly limited as long as a liquid that dissolves the binder resin included in the secondary particles is applied on predetermined regions, and can be selected as appropriate depending on an intended purpose. The liquid application regions may be a part or whole of the powder layer. It is preferable that an amount of the liquid to be applied is adjustable.

Examples of the method for applying the liquid on the predetermined regions include, but are not limited to, a dispenser method, a spray method, and an inkjet method. Above all, an inkjet method is preferable. The inkjet method has advantages of better droplet quantitativity compared to the spray method and of a wider application area compared to the dispenser method, and can therefore shape a complex shape with high accuracy and high efficiently.

In the case of the inkjet method, the application unit has a nozzle that can apply the liquid on the predetermined regions. As for the nozzle, a nozzle (discharge head) for a known inkjet printer can be desirably used. Each amount of the liquid discharged from a plurality of nozzles can be controlled to adjust an amount or an area of the liquid to be applied on the powder layer.

<Liquid>>

The liquid is not particularly limited as long as the liquid can dissolve the binder resin in the secondary particles and can be selected as appropriate depending on an intended purpose.

The liquid contains a solvent and optionally other components.

- Solvent -

The solvent is not particularly limited as long as the solvent can dissolve the binder resin in the secondary particles and can be selected as appropriate depending on an intended purpose, but an organic solvent is preferable. The organic solvent has a boiling point higher than a certain level for stable application. Specifically, the organic solvent preferably has a boiling point of 75°C or higher, more preferably 150°C or higher. As the organic solvent, dimethyl sulfoxide (DMSO), diacetone alcohol (DAA), and ethyl acetate are particularly preferable. Each of these solvents may be used alone or in combination with others.

A content of the solvent in the liquid is not particularly limited and can be selected as appropriate depending on an intended purpose, but is preferably 90% by mass or more, more preferably 95% by mass or more, particularly preferably 100% by mass.

- Other Components -

Other components are not particularly limited and can be selected as appropriate depending on an intended purpose. Examples of other components include, but are not limited to, dispersants, surfactants, resins, and inorganic particles. As inorganic particles are contained, the density of the three-dimensional fabricated object is increased. When the liquid contains other components, the lower limit of the content of the solvent in the liquid is preferably 30% by mass or more, more preferably 40% by mass or more, and the upper limit of the content of the solvent in the liquid is preferably 95% by mass or less, more preferably 90% by mass or less.

<Heating Process>

In the heating process, the powder layer applied with the liquid is heated. Examples of a heating unit includes, but are not particularly limited to, an IR heater and a ceramic heater. As the heating timing, it is preferable that the heating is performed while the liquid is not applied by the application unit, for example, immediately after completion of the application process, or during the formation process. In particular, it is preferable to perform the heating immediately after application of the liquid on the powder layer in the application process because the liquid dissolves the binder resin by the heating to achieve a predetermined viscoelasticity, resulting in a high-density and high-precision three-dimensional fabricated object. In the heating process, the powder layer is heated for a certain period of time before beginning of the formation process, a predetermined temperature is maintained for a predetermined period of time, and then the heating process is completed. Preferably, the heating is performed e.g. for about 5 to 30 seconds from immediately after the liquid lands on the powder layer.

Preferably, the heating unit also has a cooling function to control the temperature of the powder layer applied with the liquid. The cooling function may be implemented by, for example, an air blowing fan. Owing to the cooling function, the temperature of the powder layer can be controlled to 30°C or higher and 60°C or lower. When the temperature of the powder layer is within the aforementioned range, the viscosity of the fabricated object in the powder layer can be controlled.

<Other Processes>

Other processes are not particularly limited, and can be selected as appropriate depending on an intended purpose. Examples of other processes include, but are not limited to, a vibration process, a measurement process, a drying process, a degreasing process, and a sintering process.

In the vibration process, the density of the fabricated object is increased by vibrating the powder layer to decrease the viscosity of the fabricated object. Preferably, the vibration applied to the powder layer has an amplitude of 0.1 mm and a frequency of 1 kHz without any limitation.

In the measurement process, the viscosity of the fabricated object is measured during fabrication. The viscosity of the surface of the fabricated object is measured for each repeated cycle of the formation and application processes. The measurement process makes it possible to confirm an over-time-change in the viscosity of the fabricated object during fabrication. The amount or area of the liquid to be applied in the next repeated application process can be adjusted so that the measured viscosity is the predetermined value. As a means of measuring the viscosity of the fabricated object during fabrication, a non-contact measurement is preferable, such as a measurement using a low-frequency sound wave and a laser displacement gage, and a diffusing wave spectroscopy (DWS) in which a sample is irradiated with a laser beam to evaluate a vibration of a reflected scattered light intensity. However, it is also possible to use a direct method in which a fabricated object is taken out using tweezers or another instrument during fabrication and subjected to a rheometer measurement.

In the drying process, the organic solvent is removed from the fabricated object.

The drying process can be implemented for each layer using an infrared heater or another apparatus after the formation process and application process. The drying method is not particularly limited, and any known method can be used. However, a method that does not cause cracking and deformation should be selected depending on a type of the solvent. For example, if ethanol is used as the solvent, drying at 50°C for 24 hours is preferable.

In the degreasing process, the fabricated object that has been dried in the drying process is degreased.

The degreasing method is not particularly limited, and any known method can be used. For example, when alumina is used as the primary particles, the primary particles can be desirably degreased by a heat treatment under a nitrogen-substituted environment at 500°C for 3 hours, but the degreasing method is not particularly limited to this heat treatment.

In the sintering process, the fabricated object that has been degreased in the degreasing process is sintered.

The sintering method is not particularly limited, and any known method can be used. However, from the viewpoint of maximizing the effect of the present embodiment, sintering under normal pressure is preferable. The atmosphere, and the heat treatment temperature and time should be adjusted depending on the material. For example, when alumina is used as the primary particles, a heat treatment under argon atmosphere at 1,550°C for 3 hours is suitable. Although the density can be increased by increasing the heat treatment temperature, there are disadvantages such as decreased strength and deformation due to formation of coarse particles instead. Thus, the conditions should be optimized.

As a sintering method, for example when the material is of a graphite type, for example, an electric current sintering method using a pulse electroheating or another way can be desirably used, but the sintering method is not limited to this electric current sintering method.

Although the drying process, degreasing process, and sintering process can be implemented according to the fabrication material, the fabricated object is generally characterized in shape. Thus, in many cases, no pressurizing means is used to prevent collapse of the fabricated object. Particularly in sintering process, pressure sintering (hot press) is often conducted to improve a sintered density, but the present embodiment basically presupposes atmospheric sintering without using hot press.

According to the present embodiment, in the method for producing the three-dimensional fabricated object as a ceramic, the three-dimensional fabricated object is obtained after the raw materials for the three-dimensional fabricated object are temporarily bound together. In this case, for example, when a resin is used for binding, the resin for binding may be used in a small amount, resulting in less volume shrinkage after sintering. As a result, even when fabrication a large structural member, cracking during sintering can be prevented. Thus, for example, a model having a dimension practical for a structural member can be fabricated.

The three-dimensional fabrication is completed in a state that the fabricated object formed by repeating the formation process and the application process is buried in the powder.

At this time, the fabricated object contains a large amount of solvent and therefore has low strength and poor handleability. Thus, the fabricated object should be dried.

The drying method is not particularly limited, and any known method can be used. However, a method that does not cause cracking and deformation should be selected depending on a type of the solvent. For example, if ethanol is used as the solvent, drying at 50°C for 24 hours is preferable.

(Three-Dimensional Fabricated Object)

The three-dimensional fabricated object according to the present embodiment is produced by the three-dimensional fabricated object producing method according to the present embodiment.

Applications of the three-dimensional fabricated object are not particularly limited and can be selected as appropriate depending on an intended purpose. For example, the three-dimensional fabricated object can be desirably used for meters, operation panels, and parts of automobiles, office automation (OA) equipment, electric and electronic equipment, cameras, or other equipment, as well as daily commodities, trial products, and other articles.

Here, the method for producing the three-dimensional fabricated object and the fabrication apparatus according to the present embodiment will be explained below with reference to the drawings.

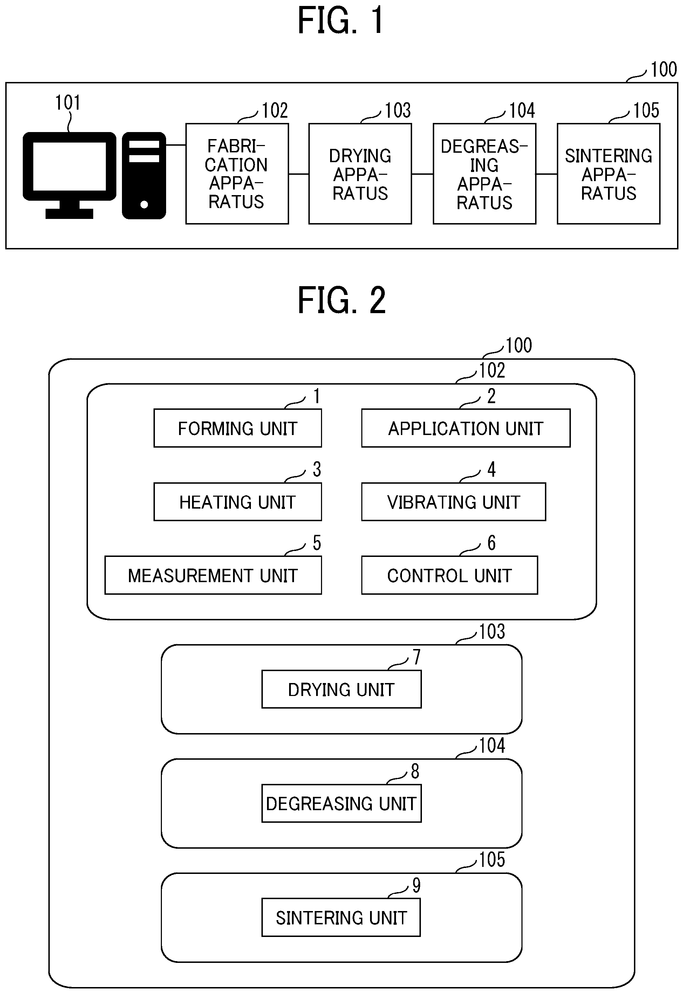

FIG. 1 is a conceptual diagram illustrating a three-dimensional fabricated object producing method according to one embodiment of the present invention.

FIG. 2 is a functional block diagram of a fabrication system according to one embodiment of the present invention.

A fabrication system 100 has a computer 101, a fabrication apparatus 102, a drying apparatus 103, a degreasing apparatus 104, and a sintering apparatus 105.

The fabrication apparatus 102 includes a forming unit 1, an application unit 2, a heating unit 3, a vibrating unit 4, a measurement unit 5, and a control unit 6. The drying apparatus 103 includes a drying unit 7. The degreasing apparatus 104 includes a degreasing unit 8. The sintering apparatus 105 includes a sintering unit 9.

The computer 101 transmits three-dimensional data ("3D data") of an object to be three-dimensionally fabricated to the fabrication apparatus 102.

The fabrication apparatus 102 fabricates an object based on the 3D data. The object is fabricated through a formation process in the forming unit 1, an application process in the application unit 2, a heating process in the heating unit 3, a vibration process in the vibrating unit 4, and a measurement process in the measurement unit 5.

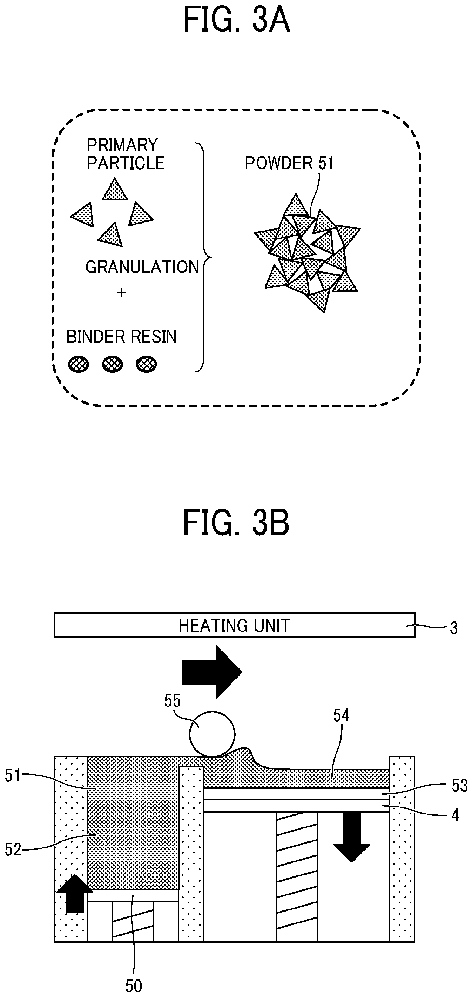

The forming unit 1 is intended to implement the formation process of forming a powder layer with a powder containing a ceramic material. FIG. 3A is a schematic diagram illustrating a powder containing a ceramic material according to one embodiment of the present invention. As the powder containing ceramic material used for the formation in the forming unit 1, secondary particles are granulated using primary particles and a binder resin. The secondary particles are used for the formation in the forming unit 1. For example, the primary particles containing the ceramic material are mixed with the binder resin in a solvent and fully dispersed to prepare a slurry. The slurry is then dried and pulverized to prepare the secondary particles. The secondary particles have a three-dimensional structure in which fine primary particles bind to each other so as to form interstitial spaces. The secondary particles are almost spherical.

FIG. 3B is a schematic diagram illustrating a three-dimensional fabricated object producing method according to one embodiment of the present invention. The fabrication apparatus 102 has the forming unit 1 including a stage 50, a feeding-side powder storage vessel 52, a stage 53, a fabrication-side powder storage vessel 54, and a flattening unit 55.

The feeding-side powder storage vessel 52 stores a powder 51. The feeding-side powder storage vessel 52 has the ascendable and descendable stage 50. On the fabrication-side powder storage vessel 54, the powder layer is formed. The fabrication-side powder storage vessel 54 has the ascendable and descendable stage 53. As the flattening unit 55, e.g. a roller moves from the feeding-side powder storage vessel 52 to the fabrication-side powder storage vessel 54 so that the powder 51 in the feeding-side powder storage vessel 52 moves to the fabrication-side powder storage vessel 54. Thereby, a powder layer of the powder 51 is formed on the stage 53. An average thickness of the powder layer is not particularly limited and can be selected as appropriate depending on an intended purpose. An average thickness of one layer is preferably 10 $\mu$m or larger and 200 $\mu$m or smaller, more preferably 30 $\mu$m or larger and 100 $\mu$m or smaller.

The application unit 2 is intended to implement the application process of applying a liquid to the powder layer formed in the forming unit 1. This application process allows the binder resin contained in the powder 51 to be dissolved in the liquid.

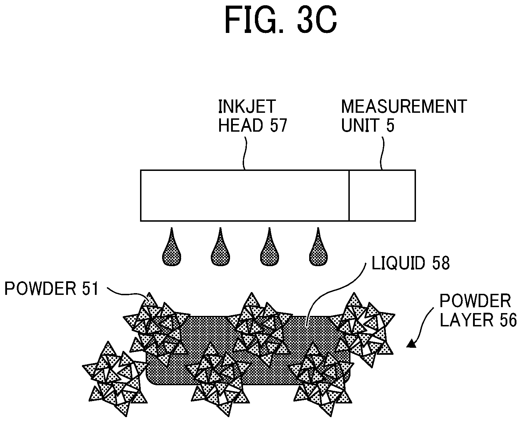

FIG. 3C is a schematic diagram illustrating a three-dimensional fabricated object producing method according to one embodiment of the present invention. An example using an inkjet head 57 as the application unit 2 is illustrated. A liquid 58 is applied on a powder layer 56 using the inkjet head 57. Thereby, the binder resin is dissolved in the liquid. Voids formed between the secondary particles are filled with the primary particles. As a result, regions applied with the liquid 58 are fixed by the binder resin. Furthermore, regions applied with the liquid 58 are homogenized due to collapse of the shape of the secondary particles, to decrease voids and unsolidified regions.

The application unit 2 can adjust the application amount and application area of the liquid 58. Specifically, the application unit 2 may control each amount of the liquid 58 to be injected from the plurality of inkjet heads 57 in response to instructions from the control unit 6. Thereby, the viscosity of the fabricated object can be adjusted during fabrication.

The heating unit 3 is intended to implement the heating process of heating the powder layer 56 applied with the liquid 58 in the application unit 2.

Preferably, the heating unit 3 also has a cooling function to control the temperature of the powder layer 56 applied with the liquid 58 to a predetermined value. The heating unit 3 may control the viscosity of the powder layer 56 by setting the temperature of the powder layer 56 to 30°C or higher and 60°C or lower in response to instructions from the control unit 6. It is preferable that the heating unit 3 controls the temperature of the powder layer 56 by heating the powder layer 56 and the whole inside of the fabrication apparatus using e.g. an infrared heater or a ceramic heater as illustrated in FIG. 3B. However, the heating unit 3 is not limited to these configurations.

The vibrating unit 4 is intended to implement a vibration process of vibrating the powder layer 56. The vibrating unit 4 can be disposed on a lower part of the stage 53 as illustrated in FIG. 3B, but the vibrating unit 4 is not limited to this configuration. By vibrating the powder layer 56 applied with the liquid 58, the density of the powder layer 56 can be increased and the viscosity of the powder layer 56 can be decreased. An amplitude and a frequency of the vibration applied to the powder layer 56 by the vibrating unit 4 may be controlled by the control unit 6.

The measurement unit 5 is intended to implement a measurement process of measuring the viscosity of the fabricated object in a non-contact manner during fabrication. For example, the measurement unit 5 can be disposed on the side of the inkjet head 57 as illustrated in FIG. 3C, but the measurement unit 5 is not limited to this configuration.

The control unit 6 controls the operation of each of the units including the application unit 2 and the heating unit 3. The control unit 6 may be e.g. an arithmetic processing unit such as a central processing unit (CPU). The control unit 6 can adjust the amount or area of the liquid 58 to be applied in the next application process and the temperature of the powder layer so that the viscosity measured in the measurement process is the predetermined value. The viscosity of the fabricated object correlates with the amount of the liquid 58 to be applied. Also, the viscosity of the fabricated object similarly correlates with the temperature of the powder layer. A higher temperature results in a lower viscosity. A lower temperature results in a higher viscosity. The viscosity of the fabricated object rapidly responds to the liquid amount and slowly to the temperature. Using this difference in responsiveness, when the measurement result is slowly changed, the viscosity is controlled by the temperature, and when the measurement result is rapidly changed, the viscosity is controlled by the liquid amount, so that the viscosity can be promptly adjusted to a desired value.

The control unit 6 may be disposed in the computer 101.

The drying unit 7 is intended to implement the drying process of removing the organic solvent from the fabricated object. The drying process can be implemented for each layer using an infrared heater or another apparatus after the formation process and application process. The drying method is not particularly limited, and any known method can be used. However, a method that does not cause cracking and deformation should be selected depending on a type of the solvent. For example, if ethanol is used as the solvent, drying at 50°C for 24 hours is preferable.

The degreasing unit 8 is intended to implement the degreasing process of degreasing the fabricated object dried in the drying process. The degreasing method is not particularly limited, and any known method can be used. For example, when alumina is used as the primary particles, the primary particles can be desirably degreased by a heat treatment under a nitrogen-substituted environment at 500°C for 3 hours, but the degreasing method is not particularly limited to this heat treatment.

The sintering unit 9 is intended to implement a sintering process of sintering the fabricated object that has been degreased in the degreasing process. This sintering process makes it possible to obtain a three-dimensional fabricated object.

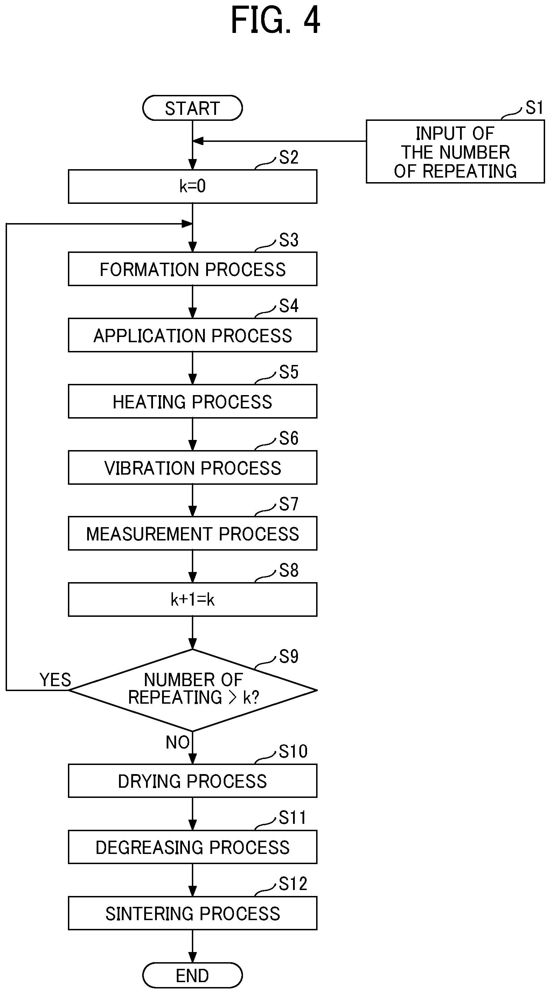

FIG. 4 is a flowchart of a process flow in a three-dimensional fabricated object producing method according to one embodiment of the present invention. The process flow in the three-dimensional fabricated object producing method according to the present embodiment will be explained. The descriptions that overlap with those explained for FIG. 2 to FIG. 3C are omitted as appropriate.

In step S1, when the number of repetitions of the process is input into the fabrication apparatus 102 by a user, the process proceeds to step S2.

In step S2, when "k=0" is input into the fabrication apparatus 102 by a user, the process proceeds to step S3.

In step S3, when the forming unit 1 implements the formation process of forming the powder layer 56, the process proceeds to step S4.

In step S4, when the application unit 2 implements the application process of applying the liquid 58 to the powder layer 56, the process proceeds to step S5.

In step S5, when the heating unit 3 implements the heating process of heating the powder layer 56, the process proceeds to step S6.

In step S6, when the vibrating unit 4 implements the vibration process of vibrating the powder layer 56, the process proceeds to step S7.

In step S7, when the measurement unit 5 implements the measurement process of measuring the viscosity of the fabricated object, the process proceeds to step S8. The fabrication apparatus 102 adjusts the amount or area of the liquid 58 to be applied and the temperature of the powder layer 56 based on the measurement results in the measurement process, so that the viscosity is the predetermined value. As a means of measuring the viscosity of the fabricated object during fabrication, a non-contact measurement is preferable, such as a measurement using a low-frequency sound wave and a laser displacement gage, and DWS in which a sample is irradiated with a laser beam to evaluate a vibration of a reflected scattered light intensity.

The amount or area of the liquid 58 to be applied and the temperature of the powder layer 56 may be adjusted using a model that has learned through a machine learning. Details of the adjustment using the learned model are described below.

In step S8, when "k+1=k" is input, the process proceeds to step S9.

In step S9, if the control unit 6 determines that k is smaller than the number of repetitions of the process, the process returns to step S3, and if the control unit 6 determines that k is greater than the number of repetitions of the process, the process proceeds to step S10.

The formation process, the application process, the heating process, the vibration process, and the measurement process are repeated until a desired number of laminated layers are obtained. Thereby, a fabricated object is formed on the stage 53.

In step S10, when the drying unit 7 implements the drying process, the process proceeds to step S11.

In step S11, when the degreasing unit 8 implements the degreasing process, the process proceeds to step S12.

In step S12, when the sintering unit 9 implements the sintering process, the whole process is completed to obtain a three-dimensional fabricated object.

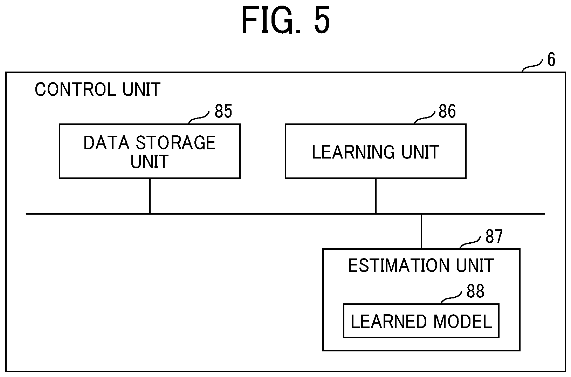

The adjustment of the amount or area of the liquid 58 to be applied and the temperature of the powder layer 56 by the control unit 6 will be explained referring to FIG. 5.

In the control unit 6 according to the present embodiment, the amount or area of the liquid 58 and the temperature of the powder layer 56 for adjusting the viscosity of the fabricated object to the predetermined value may be estimated using a learned model. In this case, in the fabrication apparatus 102, the control unit 6 controls the application unit 2 based on the estimation result determined by the learned model to adjust the amount or area of the liquid 58 so that the viscosity of the fabricated object is the predetermined value. Also, in the fabrication apparatus 102, the control unit 6 controls the heating unit 3 based on the estimation result determined by the learned model to adjust the temperature of the powder layer 56 so that the viscosity of the fabricated object is the predetermined value.

FIG. 5 is a diagram illustrating a function of a control unit according to one embodiment of the present invention. The control unit 6 according to the present embodiment includes a data storage unit 85, a learning unit 86, and an estimation unit 87. The functions of the data storage unit 85, the learning unit 86, and the estimation unit 87 may be achieved by a machine learning program installed in the control unit 6.

The data storage unit 85 stores data including the fabrication condition including at least one of the amount or area of the liquid 58 to be applied by the application unit 2 and the temperature of the powder layer 56. The data storage unit 85 may store data of the viscosity of the fabricated object measured by the measurement unit 5 together with data of the fabrication condition and other conditions.

The learning unit 86 extracts a feature quantity based on data stored in the data storage unit 85 and learns a relationship between the viscosity of the fabricated object and the fabrication condition based on the feature quantity.

The learning unit 86 generates a learned model 88 that has learned the relationship between the fabrication condition and the viscosity of the fabricated object e.g. using, as teacher data, a data set including the fabrication condition stored in the data storage unit 85 and the viscosity of the fabricated object measured by the measurement unit 5 which are associate with each other. The learned model 88 may be stored in the estimation unit 87. The learned model 88 may estimate such a fabrication condition that, when inputting a viscosity value of the fabricated object, the viscosity of the fabricated object becomes the input value.

Examples of the algorithm applicable in the learning unit 86 include, but are not particularly limited to, a deep learning with a neural network, an unsupervised learning model, a supervised learning model, a reinforcement learning model.

The estimation unit 87 estimates the fabrication condition corresponding to the input viscosity of the fabricated object based on the learning of the learning unit 86. For example, when a viscosity value of the fabricated object is input, the estimation unit 87 inputs the input value into the learned model 88 to estimate the fabrication condition output from the learned model 88.

The control unit 6 controls the application unit 2 or the heating unit 3 based on the fabrication condition estimated by the estimation unit 87. The control unit 6 controls the application unit 2 and the heating unit 3 e.g. based on the amount or area of the liquid 58 to be applied and the temperature of the powder layer 56 which are included in the fabrication condition estimated by the estimation unit 87.

In this embodiment, as described above, the amount or area of the liquid 58 to be applied and the temperature of the powder layer 56 can be adjusted using the learned model generated through the machine learning.

EXAMPLES

Examples of the present embodiment are described below, but the present invention is not limited in any way to these examples.

A three-dimensional fabricated object was produced according to the three-dimensional fabricated object producing method illustrated in FIG. 3A to FIG. 3C and the flowchart illustrated in FIG. 4. The powders and organic solvents used in Examples and Comparative Examples are listed in Table 1.

First, the powders were prepared.

(Example 1)

<Preparation of Primary and Secondary Particles>

First, 0.4 $\mu$m primary particles (alumina: high-purity alumina AHP200, manufactured by Nippon Light Metal Co., Ltd.) and 10 wt% of binder resin (polyvinyl butyral (PVB): MOWITAL B30, manufactured by KURARAY CO., LTD.), listed in Table 1, were mixed in a solvent (methylethylketone: manufactured by SANKYO CHEMICAL Co., Ltd.) and fully dispersed to prepare a slurry. The slurry was then dried and pulverized to prepare secondary particles with a central particle diameter of 20 $\mu$m. The secondary particles have a three-dimensional structure in which fine primary particles bind to each other with interstitial spaces to constitute almost spherical secondary particles.

The central particle diameters of the primary and secondary particles were measured as follows.

- Measurement of Central Particle Diameter of Primary and Secondary Particles -

Each central particle diameter of the primary and secondary particles is a cumulative 50% particle diameter (D50) based on the volume-based particle size distribution determined by measuring each particle using a laser diffraction/-scattering particle size meter (LA-300, manufactured by HORIBA, Ltd.).

For the fabrication, a binder jet fabrication apparatus (manufactured by Desktop Metal, Inc.) and a simple prototype machine that was partially adapted to the solvent were used. In this example, printing was performed at 600 DPI with a deposition thickness of 100 $\mu$m. As fabricated objects, three cubes of 10 mm × 10 mm × 10 mm and three flat plates of 40 mm × 40 mm × 1 mm were fabricated. One of the cubes was taken out immediately after the fabrication to measure its viscosity. The remaining two cubes were dried at 50°C for 24 hours together with the three flat plates.

<Amount of Liquid (Organic Solvent)>

As the liquid (organic solvent), 50 Voxel% of DMSO (Sterilized grade (StG), manufactured by TORAY FINE CHEMICALS CO., LTD.) was used. Voxel is a unit volume in the three-dimensional fabrication method and is calculated by the following equation:

$$\text{Voxel } [L] = 1/(DPI/2.54) * 1/(DPI/2.54) * t$$

Voxel [L]=1/(DPI/2.54)*1/(DPI/2.54)*t wherein t is a deposition thickness.

The volume [L] of the discharged liquid can be calculated from a weight of any number of drops discharged and a density of the liquid.

Voxel% as the application amount can be calculated by an equation: discharged liquid volume [L]/Voxel [L].

<Powder Surface Temperature>

In the heating unit, the powder surface temperature was set to 30°C. Herein, the powder surface temperature refers to a temperature of a part of the powder layer formed by the forming unit, or a region where the liquid is applied on the powder layer by the application unit.

<Degreasing and Sintering>

For the degreasing and sintering, the fabricated object was heated to each predetermined temperature ranging from 1,100°C to 1,500°C at a rate of 5°C/min in an electric furnace. Then, the fabricated object was maintained in this state for 2 hours. Then, the fabricated object was cooled in the furnace to obtain a three-dimensional fabricated object.

(Example 2)

In Example 2, the fabricated object and the three-dimensional fabricated object were obtained in the same manner as in Example 1 except that the powder surface temperature was changed from 30°C to 60°C.

(Example 3)

In Example 3, the fabricated object and the three-dimensional fabricated object were obtained in the same manner as in Example 1 except that the primary particle diameter was changed from 0.4 μm to 2.1 μm and the powder surface temperature was changed from 30°C to 50°C.

(Example 4)

In Example 4, the fabricated object and the three-dimensional fabricated object were obtained in the same manner as in Example 1 except that the primary particle diameter was changed from 0.4 μm to 2.1 μm.

(Example 5)

In Example 5, the fabricated object and the three-dimensional fabricated object were obtained in the same manner as in Example 3 except that the amount of the binder resin was changed from 10 wt% to 5 wt%, and the powder surface temperature was changed from 50°C to 60°C.

(Example 6)

In Example 6, the fabricated object and the three-dimensional fabricated object were obtained in the same manner as in Example 3 except that the amount of the binder resin was changed from 10 wt% to 5 wt%, and the type of the organic solvent was changed from DMSO to DAA.

(Example 7)

In Example 7, the fabricated object and the three-dimensional fabricated object were obtained in the same manner as in Example 6 except that the type of the organic solvent was changed from DAA to ethyl acetate (special grade, >_99.5%, manufactured by Hayashi Pure Chemical Ind.,Ltd.).

(Example 8)

In Example 8, the fabricated object and the three-dimensional fabricated object were obtained in the same manner as in Example 3 except that the amount of the binder resin was changed from 10 wt% to 8 wt%, and the amount of the organic solvent was changed from 50 voxel% to 51 voxel%.

(Example 9)

In Example 9, the fabricated object and the three-dimensional fabricated object were obtained in the same manner as in Example 8 except that the amount of the binder resin was changed from 8 wt% to 5 wt%.

(Example 10)

In Example 10, the fabricated object and the three-dimensional fabricated object were obtained in the same manner as in Example 8 except that the amount of the binder resin was changed from 8 wt% to 4 wt%.

(Example 11)

In Example 11, the fabricated object and the three-dimensional fabricated object were obtained in the same manner as in Example 9 except that the primary particle diameter was changed from 2.1 μm to 0.4 μm, and the amount of the organic solvent was changed from 51 voxel% to 55 voxel%.

(Example 12)

In Example 12, the fabricated object and the three-dimensional fabricated object were obtained in the same manner as in Example 11 except that the amount of the organic solvent was changed from 55 voxel% to 60 voxel%.

(Example 13)

In Example 13, the fabricated object and the three-dimensional fabricated object were obtained in the same manner as in Example 11 except that the amount of organic solvent was changed from 55 voxel% to 65 voxel%.

(Comparative Examples 1 to 16)

In Comparative Examples 1 to 16, the fabricated object and the three-dimensional fabricated object were obtained in such a manner that the primary particle diameter, the amount of the binder resin, the organic solvent, and the powder surface temperature were changed to those listed in Table 1.

The measurement results of the three-dimensional fabricated objects obtained in Examples and Comparative Examples are listed in Table 2.

<Viscosity Measurement>

One of the cubic fabricated objects was subjected to a surface viscosity measurement according to ISO 6721-10. For the viscosity measurement, a rheometer (MCR302, manufactured by Anton Paar Japan K.K.) was used. The viscosity was measured with a gap of 0.1 mm by a method of shear viscosity using a plate PP20 at a temperature of 25°C and a frequency of 1 Hz. A viscosity at a strain of 0.1% was considered to be close to the viscosity of the fabricated object during fabrication. This viscosity was adopted.

<Shapability of Three-Dimensional Fabricated Object>

Shapability of the three-dimensional fabricated object was evaluated in accordance with the following criteria.

[Evaluation Criteria]

Y: The fabrication succeeded.
N1: The fabrication failed because the fabricated object significantly warps to come into contact with the recoater.
N2: The fabrication failed because the fabricated object thickened to come into contact with the recoater.
N3: The fabrication failed due to cracks.

<Filling Ratio>

A density of the cubic three-dimensional fabricated object was measured by Archimedes method to calculate its filling ratio.

<Warp Amount and Median Plate Thickness>

A warp amount and a median plate thickness of the flat three-dimensional fabricated object were measured using a height gauge.

Table 1

| | Primary particle diameter [μm] | Binder resin amount [wt%] | Organic solvent | | Powder surface temperature [°C] |
|---|---|---|---|---|---|
| | | | Type | Amount [voxel%] | |
| Example 1 | 0.4 | 10 | DMSO | 50 | 30 |
| Example 2 | 0.4 | 10 | DMSO | 50 | 60 |
| Example 3 | 2.1 | 10 | DMSO | 50 | 50 |

(continued)

| | Primary particle diameter [μm] | Binder resin amount [wt%] | Organic solvent | | Powder surface temperature [°C] |
|---|---|---|---|---|---|
| | | | Type | Amount [voxel%] | |
| Example 4 | 2.1 | 10 | DMSO | 50 | 30 |
| Example 5 | 2.1 | 5 | DMSO | 50 | 60 |
| Example 6 | 2.1 | 5 | DAA | 50 | 50 |
| Example 7 | 2.1 | 5 | Ethyl acetate | 50 | 50 |
| Example 8 | 2.1 | 8 | DMSO | 51 | 50 |
| Example 9 | 2.1 | 5 | DMSO | 51 | 50 |
| Example 10 | 2.1 | 4 | DMSO | 51 | 50 |
| Example 11 | 0.4 | 5 | DMSO | 55 | 50 |
| Example 12 | 0.4 | 5 | DMSO | 60 | 50 |
| Example 13 | 0.4 | 5 | DMSO | 65 | 50 |
| Comparative Example 1 | 0.4 | 10 | DMSO | 50 | 25 |
| Comparative Example 2 | 0.4 | 10 | DMSO | 50 | 70 |
| Comparative Example 3 | 2.1 | 10 | DMSO | 20 | 25 |
| Comparative Example 4 | 2.1 | 2 | DMSO | 50 | 70 |
| Comparative Example 5 | 2.1 | 10 | DMSO | 65 | 25 |
| Comparative Example 6 | 2.1 | 10 | DMSO | 50 | 25 |
| Comparative Example 7 | 2.1 | 10 | DMSO | 50 | 70 |
| Comparative Example 8 | 2.1 | 5 | Ethyl acetate | 50 | 70 |
| Comparative Example 9 | 20 | 10 | DMSO | 50 | 25 |
| Comparative Example 10 | 20 | 10 | DMSO | 60 | 70 |
| Comparative Example 11 | 2.1 | 8 | DMSO | 51 | 70 |
| Comparative Example 12 | 2.1 | 2 | DMSO | 51 | 25 |
| Comparative Example 13 | 0.4 | 5 | DMSO | 70 | 70 |
| Comparative Example 14 | 0.4 | 5 | DMSO | 55 | 70 |
| Comparative Example 15 | 0.4 | 20 | DMSO | 55 | 50 |
| Comparative Example 16 | 0.4 | 5 | DMSO | 70 | 50 |

Table 2

| | Viscosity of fabricated object [Pa·s] | Shapability | Filling ratio [%] | Warp of flat plate [mm] | Median thickness of flat plate [mm] |
|---|---|---|---|---|---|
| Example 1 | 100,000 | Y | 90 | 0.9 | 1.1 |
| Example 2 | 1,000 | Y | 90 | 0.4 | 1.5 |
| Example 3 | 1,000 | Y | 90 | 0.2 | 1.5 |
| Example 4 | 12,000 | Y | 90 | 0.2 | 1.5 |
| Example 5 | 90,000 | Y | 90 | 0.9 | 1.1 |
| Example 6 | 80,000 | Y | 93 | 0.9 | 1.1 |
| Example 7 | 14,000 | Y | 94 | 0.3 | 1.4 |
| Example 8 | 2,200 | Y | 90 | 0.4 | 1.5 |

(continued)

|  | Viscosity of fabricated object [Pa·s] | Shapability | Filling ratio [%] | Warp of flat plate [mm] | Median thickness of flat plate [mm] |
|---|---|---|---|---|---|
| Example 9 | 11,000 | Y | 95 | 0.6 | 1.1 |
| Example 10 | 62,000 | Y | 92 | 0.7 | 1.1 |
| Example 11 | 50,000 | Y | 94 | 0.5 | 1.2 |
| Example 12 | 7,500 | Y | 97 | 0.4 | 1.3 |
| Example 13 | 1,200 | Y | 90 | 0.4 | 2.1 |
| Comparative Example 1 | 180,000 | N1 | - | - | - |
| Comparative Example 2 | 500 | N3 | - | - | - |
| Comparative Example 3 | Unmeasurable | Y | 70 | 0.5 | 1.1 |
| Comparative Example 4 | 210,000 | N1 | - | - | - |
| Comparative Example 5 | 950 | N2 | - | - | - |
| Comparative Example 6 | 150,000 | N1 | - | - | - |
| Comparative Example 7 | 500 | N2 | - | - | - |
| Comparative Example 8 | Unmeasurable | N3 | - | - | - |
| Comparative Example 9 | Unmeasurable | Y | 70 | 0.5 | 1.1 |
| Comparative Example 10 | Unmeasurable | N2 | - | - | - |
| Comparative Example 11 | 800 | N2 | - | - | - |
| Comparative Example 12 | 110,000 | Y | 90 | 1.5 | 1.1 |
| Comparative Example 13 | 800 | N2 | - | - | - |
| Comparative Example 14 | 9,000 | N1 | - | - | - |
| Comparative Example 15 | 110,000 | Y | 83 | 2.3 | 1.1 |
| Comparative Example 16 | 500 | N2 | - | - | - |

In Comparative Examples 3, 8, 9, and 10, the fabricated objects were maintained in a powder state without viscosity. Thus, their viscosities could not be measured. The symbol "-" in Table 2 indicates that the measurement was impossible due to failed fabrication.

When a small amount of the organic solvent was used (Comparative Example 3), or when a material having a large particle diameter was used (Comparative Example 9), the fabricated object had a low density. Because the fabricated object was too powdery to show viscosity. If the viscosity was too low (Comparative Examples 5, 7, 11, 13, and 16), the fabricated object was thicker than the print area and may come into contact with the recoater during fabrication. This supports the fact that when the viscosity is higher than a certain value, mass transfer occurs and the voids are easily filled. Furthermore, if the viscosity is too high (Comparative Examples 1 and 4), the fabricated object significantly warps and may come into contact with the recoater during fabrication. Thus, there is a suitable range for the viscosity of the fabricated object.

The present invention includes the following aspects.

Aspect 1.

A method for producing a three-dimensional fabricated object including: forming a powder layer with a powder containing a ceramic material; applying a liquid on the powder layer; and heating the powder layer applied with the liquid, in which, in the heating, a temperature of the powder layer applied with the liquid is controlled to 30°C or higher and 60°C or lower, and a fabricated object obtained by repeating the forming and the applying once or more has a viscosity of 1,000 Pa s or higher and 100,000 Pa s or lower.

Aspect 2.

**[0147]** The method according to Aspect 1, further including measuring the viscosity of the fabricated object after the heating, in which an amount or area of the liquid to be applied is adjusted so that the viscosity is the predetermined value.

Aspect 3.

**[0148]** The method according to Aspects 1 or 2, further including vibrating the fabricated object after the heating.

Aspect 4.

**[0149]** The method according to any one of Aspects 1 to 3, in which, in the heating, the powder layer is heated immediately after the liquid is applied on the powder layer.

Aspect 5.

**[0150]** The method according to any one of Aspects 1 to 4, in which the powder comprises secondary particles containing primary particles.

Aspect 6.

**[0151]** The method according to Aspect 5, in which the primary particles have a particle diameter of 10 μm or smaller.

Aspect 7.

**[0152]** The method according to Aspect 5 or 6, in which the secondary particles contain a binder resin.

Aspect 8.

**[0153]** The method according to Aspect 7, in which the binder resin contains at least one of polyvinyl butyral, polyvinyl acetate, and acrylic polyol.

Aspect 9.

**[0154]** The method according to any one of Aspects 1 to 8, in which the liquid contains at least one of dimethyl sulfoxide, diacetone alcohol, and ethyl acetate.

Aspect 10.

**[0155]** A fabrication apparatus for fabrication a three-dimensional fabricated object, including: a forming unit to form a powder layer with a powder containing a ceramic material; an application unit to apply a liquid on the powder layer; and a heating unit to heat the powder layer applied with the liquid, in which the heating unit controls a temperature of the powder layer applied with the liquid to 30°C or higher and 60°C or lower.

Aspect 11.

**[0156]** The fabrication apparatus according to Aspect 10, further including a control unit including: a data storage unit to store data including a fabrication condition including at least one of an amount or area of the liquid to be applied by the application unit and the temperature of the powder layer; a measurement unit to measure a viscosity of a fabricated object; a learning unit to extract a feature quantity based on the data stored in the data storage unit and learn a relationship between the viscosity of the fabricated object and the fabrication condition based on the feature quantity; an estimation unit configured to estimate the fabrication condition corresponding to the viscosity of the fabricated object input based on the learning of the learning unit, in which the control unit controls the application unit or the heating unit based on the fabrication condition estimated by the estimation unit.

Aspect 12.

**[0157]** A fabrication system including the fabrication apparatus according to Aspect 10 or 11 and a sintering apparatus

including a sintering unit that sinters the fabricated object.

The method for producing a three-dimensional fabricated object according to any one of Aspects 1 to 9, the fabrication apparatus according to Aspect 10 or 11, or the fabrication system according to Aspect 12 make it possible to solve the various disadvantages in the related art and achieve an object of the present invention.

Any one of the above-described operations may be performed in various other ways, for example, in an order different from the one described above.

**Claims**

1.  A method for producing a three-dimensional fabricated object, the method comprising:

    forming (S3) a powder layer with a powder containing a ceramic material;
    applying (S4) a liquid on the powder layer; and
    heating (S5) the powder layer applied with the liquid, wherein
    in the heating (S5), a temperature of the powder layer applied with the liquid is controlled to 30°C or higher and 60°C or lower, and
    a fabricated object obtained by repeating the forming (S3) and the applying (S4) once or more has a viscosity of 1,000 Pa·s or higher and 100,000 Pa s or lower.

2.  The method according to claim 1, further comprising:

    measuring (S7) the viscosity of the fabricated object after the heating, wherein
    an amount or area of the liquid to be applied is adjusted so that the viscosity is a predetermined value.

3.  The method according to claim 1 or 2, further comprising:
    vibrating (S6) the fabricated object after the heating.

4.  The method according to any one of claims 1 to 3, wherein, in the heating (S5), the powder layer is heated immediately after the liquid is applied on the powder layer.

5.  The method according to any one of claims 1 to 4, wherein the powder comprises secondary particles containing primary particles.

6.  The method according to claim 5, wherein the primary particles have a particle diameter of 10 $\mu$m or smaller.

7.  The method according to claim 5, wherein the secondary particles contain a binder resin.

8.  The method according to claim 7, wherein the binder resin contains at least one of polyvinyl butyral, polyvinyl acetate, and acrylic polyol.

9.  The method according to any one of claims 1 to 8, wherein the liquid contains at least one of dimethyl sulfoxide, diacetone alcohol, and ethyl acetate.

10. A fabrication apparatus (102) for fabrication a three-dimensional fabricated object, the fabrication apparatus (102) comprising:

    a forming unit (1; 50, 52, 53, 54, 55) to form a powder layer with a powder containing a ceramic material;
    an application unit (2; 57) to apply a liquid on the powder layer; and
    a heating unit (3) to heat the powder layer applied with the liquid, wherein
    the heating unit (3) controls a temperature of the powder layer applied with the liquid to 30°C or higher and 60°C or lower.

11. The fabrication apparatus (102) according to claim 10, further comprising a control unit (6) including:

    a data storage unit (85) to store data including a fabrication condition including at least one of an amount or area of the liquid to be applied by the application unit (2) and the temperature of the powder layer;
    a measurement unit (5) to measure a viscosity of a fabricated object;

a learning unit (86) to extract a feature quantity based on the data stored in the data storage unit (85) and learn a relationship between the viscosity of the fabricated object and the fabrication condition based on the feature quantity; and

an estimation unit (87) to estimate the fabrication condition corresponding to the viscosity of the fabricated object input based on the learning of the learning unit (86), wherein

the control unit (6) controls the application unit (2; 57) or the heating unit (3) based on the fabrication condition estimated by the estimation unit (87).

12. A fabrication system (100) comprising:

the fabrication apparatus (102) according to claim 10 or 11; and
a sintering apparatus (105) including a sintering unit (9) that sinters the fabricated obj ect.

# FIG. 1

# FIG. 2

# FIG. 3A

PRIMARY
PARTICLE

GRANULATION
+

BINDER RESIN

POWDER 51

# FIG. 3B

HEATING UNIT ~ 3

55

54

51

52

53

4

50

# FIG. 3C

# FIG. 4

```
                                    ┌─────────────────┐ S1
         START                      │   INPUT OF      │
           │                        │  THE NUMBER     │
           │ ◄──────────────────────│  OF REPEATING   │
           ▼        S2              └─────────────────┘
    ┌──────────────┐
    │     k=0      │
    └──────────────┘
           │
  ┌────────┤
  │        ▼        S3
  │ ┌──────────────────┐
  │ │ FORMATION PROCESS│
  │ └──────────────────┘
  │        │         S4
  │ ┌──────────────────┐
  │ │APPLICATION PROCESS│
  │ └──────────────────┘
  │        │         S5
  │ ┌──────────────────┐
  │ │ HEATING PROCESS  │
  │ └──────────────────┘
  │        │         S6
  │ ┌──────────────────┐
  │ │ VIBRATION PROCESS│
  │ └──────────────────┘
  │        │         S7
  │ ┌──────────────────┐
  │ │MEASUREMENT PROCESS│
  │ └──────────────────┘
  │        │         S8
  │ ┌──────────────────┐
  │ │     k+1=k        │
  │ └──────────────────┘
  │        │         S9
  │       ╱ ╲
  │ YES ╱     ╲ NUMBER OF
  └───◄  REPEATING > k?
        ╲     ╱
         ╲ ╱
          │ NO          S10
    ┌──────────────────┐
    │  DRYING PROCESS  │
    └──────────────────┘
           │          S11
    ┌──────────────────┐
    │DEGREASING PROCESS│
    └──────────────────┘
           │          S12
    ┌──────────────────┐
    │ SINTERING PROCESS│
    └──────────────────┘
           │
         END
```

# FIG. 5

```
                                                              6
┌──────────────────────────────────────────────────────────┐
│ CONTROL UNIT                                               │
│                                                            │
│                    85                        86            │
│      ┌──────────────────┐      ┌──────────────────────┐    │
│      │  DATA STORAGE    │      │   LEARNING UNIT      │    │
│      │     UNIT         │      │                      │    │
│      └──────────────────┘      └──────────────────────┘    │
│               │                         │                  │
│  ─────────────┴─────────────────────────┴──────────        │
│                                    │                       │
│                                    │        87             │
│                      ┌─────────────────────────────┐       │
│                      │   ESTIMATION UNIT           │       │
│                      │                   88        │       │
│                      │  ┌───────────────────────┐  │       │
│                      │  │   LEARNED MODEL       │  │       │
│                      │  └───────────────────────┘  │       │
│                      └─────────────────────────────┘       │
└──────────────────────────────────────────────────────────┘
```

Europäisches
Patentamt
European
Patent Office
Office européen
des brevets

# EUROPEAN SEARCH REPORT

Application Number

EP 24 18 7480

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 183 556 A1 (RICOH CO LTD [JP]) 24 May 2023 (2023-05-24) | 10,12 | INV. B33Y10/00 |
| Y | * paragraphs [0069] - [0072]; claims | 8,9 | B33Y30/00 |
| A | 1,4,5,9 * | 2,11 | C04B35/626 C04B35/634 |
| | ----- | | |
| X | US 11 254 617 B2 (UT BATTELLE LLC [US]; THE EXONE CO [US]) 22 February 2022 (2022-02-22) | 10,12 | |
| A | * claims 1-9 * | 2,11 | |
| | ----- | | |
| X | US 2011/129640 A1 (BEALL GEORGE HALSEY [US] ET AL) 2 June 2011 (2011-06-02) | 1,3-7, 10,12 | |
| Y | * paragraph [0071] * | 8,9 | |
| A | | 2,11 | |
| | ----- | | |
| Y | US 2022/032540 A1 (KAMODA KIICHI [JP] ET AL) 3 February 2022 (2022-02-03) * paragraphs [0116] - [0134] * | 8,9 | |
| | ----- | | |

TECHNICAL FIELDS
SEARCHED      (IPC)

B33Y
C04B

The present search report has been drawn up for all claims

| Place of search | Date of completion of the search | Examiner |
|---|---|---|
| The Hague | 15 November 2024 | Raming, Tomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 7480

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | | Publication date | Patent family member(s) | | Publication date |
|---|---|---|---|---|---|
| EP 4183556 | A1 | 24-05-2023 | EP | 4183556 A1 | 24-05-2023 |
| | | | JP | 2023074199 A | 29-05-2023 |
| | | | US | 2023150169 A1 | 18-05-2023 |
| US 11254617 | B2 | 22-02-2022 | EP | 3908454 A1 | 17-11-2021 |
| | | | US | 2020216363 A1 | 09-07-2020 |
| | | | WO | 2020146452 A1 | 16-07-2020 |
| US 2011129640 | A1 | 02-06-2011 | NONE | | |
| US 2022032540 | A1 | 03-02-2022 | CN | 114055774 A | 18-02-2022 |
| | | | EP | 3950352 A1 | 09-02-2022 |
| | | | JP | 7512745 B2 | 09-07-2024 |
| | | | JP | 2022026529 A | 10-02-2022 |
| | | | JP | 2024124442 A | 12-09-2024 |
| | | | US | 2022032540 A1 | 03-02-2022 |

EPO FORM P0459

For more details about this annex : see Official Journal of the European Patent Office, No. 12/82

**EP 4 491 399 A1**

**Patent documents cited in the description**

- JP 2022026529 A